# EUROPÄISCHE PATENTSCHRIFT

(11) **EP 2 641 839 B1**
(45) Veröffentlichungstag und Bekanntmachung des Hinweises auf die Patenterteilung: **25.11.2015**
(21) Anmeldenummer: 12194570.3
(22) Anmeldetag: 28.11.2012
(51) Int. Cl.: B65D 25/18, B65D 77/20, B32B 27/08, B65B 9/04, B65B 47/10, B65B 61/02, B65B 61/06

(54) **Verfahren zur Herstellung einer Schale für eine Trayverpackung**
Methods for manufacturing a shell for a tray packaging
Procédés de fabrication d'une coque pour un emballage à plateau

(30) Priorität: 21.03.2012 DE 102012102410
(43) Veröffentlichungstag der Anmeldung: 25.09.2013
(73) Patentinhaber: Mondi Consumer Packaging Technologies GmbH, 48599 Gronau (DE)
(72) Erfinder: Bader Herbert Dr., 48356 Nordwalde (DE); Niepelt Ralf, 48599 Gronau (DE)
(74) Vertreter: Albrecht, Rainer Harald

(56) Entgegenhaltungen:
- WO-A1-96/19122
- WO-A2-02/092439
- DE-A1- 2 837 127
- DE-T2- 60 302 772
- US-A- 3 512 332
- US-A- 4 257 530
- US-A1- 2002 004 112

## Beschreibung

Die Erfindung betrifft Verfahren zur Herstellung einer Schale für eine Trayverpackung für Lebensmittel, welche einen Rand zur Befestigung einer Deckelfolie aufweist. Die Trayverpackung soll insbesondere eine Hochdruckbehandlung des Lebensmittels zur Verbesserung der Haltbarkeit des Lebensmittels ermöglichen.

Durch eine Hochdruckbehandlung können Lebensmittel länger haltbar gemacht werden. Bei diesem Verfahren werden verpackte Lebensmittel in eine Druckkammer eingebracht und über einen Zeitraum, der zwischen wenigen Minuten und etwa 30 min variieren kann, einem Behandlungsdruck ausgesetzt, der je nach Lebensmittel zwischen etwa 1000 bar und 10000 bar variieren kann. Die Hochdruckbehandlung kann optional mit einer Erwärmung des zu behandelnden Lebensmittels kombiniert werden. Insbesondere kommt in Betracht, das Lebensmittel vor einer Hochdruckbehandlung so weit vorzuwärmen, dass man durch die anschließende Hochdruckbehandlung eine Temperatur erreicht, die in den Bereich einer Pasteurisation kommt. Der Druck für die Hochdruckbehandlung wird über ein flüssiges Druckübertragungsmedium, zumeist Wasser, in der Druckkammer generiert. Da die Hochdruckbehandlung des Lebensmittels in der Endverpackung erfolgt, ist eine nachfolgende Rekontamination des abgepackten Lebensmittels ausgeschlossen und somit eine hohe Produktsicherheit gegeben. Das beschriebene Verfahren ist beispielsweise aus US 6,440,484 bekannt.

Durch den hohen Druck einer Hochdruckbehandlung werden besondere Anforderungen an die Lebensmittelverpackung gestellt. Kompressible Füllgüter führen beispielsweise dazu, dass die Verpackung zusammengedrückt wird und Knicke in der Verpackungsfolie entstehen. Daher ist die Anwendung der Hochdrucktechnologie bisher auf Vakuumverpackungen mit Schrumpffolie und für so genannte Slicerware, z. B. Rohschinken, beschränkt. Bei Trayverpackungen, die eine durch Tiefziehen einer mehrschichtigen Folie gebildete Schale aufweisen und durch eine Deckelfolie verschlossen sind, besteht das Problem, dass die Verpackung nicht konturgenau an dem abgepackten Lebensmittel anliegt und die Schale sich unter dem äußeren Druck irreversibel verformt. Die deformierte Verpackung ist nicht marktfähig. Hinzu kommt, dass die steife Folie, aus der die Schale üblicherweise gefertigt wird, durch Knicke irreversibel beschädigt wird und sich die physikalischen Eigenschaften der Folie, insbesondere die Barrierewirkung gegen Sauerstoff, nachteilig verändern.

Die WO 2006/097248 A1 betrifft eine Trayverpackung für Lebensmittel, die eine vorkonfektionierte Schale aufweist und mittels einer Deckelfolie verschlossen ist. Die Deckelfolie besteht aus einer elastisch dehnbaren Folie, die sich bei einer nachfolgenden Druckbehandlung an das abgepackte Lebensmittel anlegt und nach der Druckbehandlung wieder im Wesentlichen in ihre Ursprungsform zurückgeht. Die Druckbehandlung wird allerdings bei niedrigen Drücken im Bereich von weniger als 10 bar durchgeführt. Die Verpackung eignet sich ferner nur für weiche Produkte und setzt voraus, dass der nicht vom Lebensmittel ausgefüllte Raum innerhalb der Verpackung relativ klein ist. Bei Verpackungen, die einen Kopfraum von mehr als 15 % aufweisen und stückiges Füllgut enthalten, führt das Konzept mit einer elastischen Deckelfolie nicht mehr zu befriedigenden Ergebnissen.

DE 2837127 betrifft eine Trayverpackung für Lebensmittel und ein Verfahren zur Herstellung der Trayverpackung, wobei eine Außenschale und eine Innenverkleidung zusammen aus einem doppelten Blatt- oder Bahnstück tiefgezogen werden.

Vor diesem Hintergrund liegt der Erfindung die Aufgabe zugrunde, Verfahren zur Herstellung eine Trayverpackung für Lebensmittel anzugeben, die die Produktion vereinfacht und gleichzeitig die Effizient erhöht.

Die Lösung dieser Aufgabe ist ein Verfahren nach Anspruch 1 bzw. nach Anspruch 3. Vorteilhafte Ausgestaltungen der Verfahren sind in den Ansprüchen 2 und 4 beschrieben.

Die Trayfolie für die Außenschale besteht aus einer tiefziehfähigen und gegen die Barrierefolie siegelbaren Folie. Insbesondere kann die Trayfolie aus einer mehrschichtigen Folie bestehen, die vorzugsweise eine Trägerschicht aus Polyester, Polypropylen, Polystyrol oder Polycarbonat und an der Schaleninnenseite eine Deckschicht aus einem siegelfähigen Polymer, z. B. einem Polyolefin, aufweist. Die aus der Trayfolie bestehende Außenschale verleiht der Verpackung ihre äußere Form und dient zur Stabilisierung der flexiblen Innenauskleidung. Da die Sauerstoffbarrierefunktion durch Verwendung einer geeigneten flexiblen Folie auf die Innenauskleidung verlagert wird, können für die Außenschale preiswerte Materialien verwendet werden. Es sind beliebige tiefziehfähige Materialien geeignet, die mit der Barrierefolie bzw. der Innenauskleidung fest versiegelt werden können. Bevorzugt sind amorphe und zähe Materialien, z. B. die Materialkombination APET/PE. Die Trayfolie weist vorzugsweise eine Dicke zwischen 150 µm und 2000 µm auf.

Die Folie, welche die Innenauskleidung bildet, besteht aus einer zähen, flexiblen Folie, die sich während der Hochdruckbehandlung ohne Beschädigung und unter Ausbildung von Falten an das verpackte Lebensmittel anlegt und nach der Druckentlastung wieder eine im Wesentlichen faltenfreie und vor allem unversehrte Innenauskleidung der Schale bildet. Vorzugsweise besteht die flexible Folie aus einer mehrschichtigen Barrierefolie, die mindestens eine Sperrschicht für Sauerstoff aufweist. Die Barrierefolie schützt das Lebensmittel vor Sauerstoff und weist vorzugsweise polyolefinische Außenschichten und mindestens eine Zwischenschicht aus EVOH als Sauerstoffsperrschicht auf. Geeignet ist ein EVOH mit einem Ethylenanteil von 24 bis 48 mol%. Die EVOH-Schicht kann mit zumindest einer Polyamidschicht kombiniert werden. Vorzugsweise ist die EVOH-Schicht zwischen zwei Polyamidschichten eingebettet. Durch die Einbettung des EVOH zwischen PA-Schichten wird ein guter Haftungsverbund und eine sehr wirksame Sauerstoffsperrwirkung erzielt. Die Barrierefolie kann ferner eine oder mehrere weitere Sperrschichten für Flüssigkeiten, Gase, Aromen und dergleichen aufweisen und aus einer Coextrusionsfolie oder einem Folienlaminat bestehen.

Die Barrierefolie weist vorzugsweise eine Dicke zwischen 50 µm und 350 µm auf und kann als Blasfolie oder Castfolie hergestellt werden. Insbesondere, wenn die Barrierefolie als Blasfolie hergestellt wird, kann die Barrierefolie durch Verblockung von zwei mehrschichtigen Folien, die jeweils den zuvor beschriebenen Schichtenaufbau aufweisen, bereitgestellt werden. Der vielschichtige Schichtenaufbau trägt dazu bei, dass die Folie zäh und flexibel ist und darüber hinaus gleichzeitig eine sehr wirksame Sauerstoffbarrierefolie darstellt.

Bei dem Verfahren werden zunächst in eine durch Tiefziehen formbare Trayfolie Öffnungen eingebracht. Anschließend wird auf der gelochten Trayfolie eine flexible Folie angeordnet. Die gelochte Trayfolie und die flexible Folie werden in Flächenbereichen, die einen durch Tiefziehen umzuformenden Umformbereich umgeben, gasdicht in Kontakt gebracht. Anschließend wird in einem Tiefziehwerkzeug der Umformbereich durch Anlegen eines auf die Folienanordnung wirkenden Unterdrucks zu einer zweilagigen Schale umgeformt, die eine aus der Trayfolie bestehende formstabile Außenschale mit mindestens einer die Außenschale durchsetzenden Öffnung und eine aus der flexiblen Folie bestehende Innenauskleidung aufweist. Vorteilhaft hierbei ist, dass die Öffnungen in die Trayfolie bereits vor allen anderen Verarbeitungsschritten eingebracht werden können. Durch eine gasdichte Verbindung mit der flexiblen Innenfolie in einem den Umformbereich umgebenden Flächenbereich lässt sich die Anordnung aus beiden Folienlagen trotzdem durch Unterdruck verformen.

Die Trayfolie und die flexible Folie werden mittels eines Klemmwerkzeuges, welches den Umformbereich umgibt, während des Tiefziehens gasdicht in Kontakt gebracht und nach dem Tiefziehen im Randbereich der Schale oder in einem randnahen Bereich der Schale fest verbunden.

Die Außenschale und die Innenauskleidung können insbesondere durch mindestens eine Siegelnaht, welche den Umformbereich umgibt, nach dem Tiefziehen thermisch verbunden werden. Es ist darüber hinaus möglich, die Trayfolie und die flexible Innenfolie in einem einzigen Siegelschritt auch gleichzeitig mit einer in einem späteren Verpackungsschritt aufgebrachten Deckelfolie anzusiegeln.

Gemäß einer weiteren Verfahrensalternative wird die Schale durch Tiefziehen eines aus der Trayfolie und der flexiblen Folie vorgefertigten zweilagigen Verbundmaterials geformt. Dabei bildet die Trayfolie eine erste Lage des Verbundmaterials und die flexible Folie die zweite Lage des Verbundmaterials. Die beiden Lagen sind außerhalb des durch Tiefziehen umzuformenden Umformbereiches flächig miteinander verbunden. Innerhalb des Umformbereiches ist keine feste Verbundhaftung zwischen der Trayfolie und der flexiblen Folie vorhanden. Die Trayfolie enthält im Umformbereich mindestens eine Öffnung. Ein derartiges Laminat kann als Vorprodukt auf Vorrat produziert werden und vereinfacht und beschleunigt dadurch den Herstellungsprozess der Trayverpackung.

Die Trayfolie und die flexible Folie des Verbundmaterials können durch eine Klebstoffschicht verbunden werden, die im Umformbereich des Verbundmaterials unterbrochen ist. Zusätzlich oder alternativ kann im Umformbereich auf einer zur Klebstoffschicht benachbarten Folienfläche des Verbundmaterials eine Releaseschicht angebracht sein, die an der Klebstoffschicht nicht haftet. Gerade bei einer klebenden Verbindung der beiden Folienschichten bietet sich eine Vorproduktion des Verbundes aus Trayfolie und flexibler Innenfolie an, da somit im Produktionsablauf die Trocknungszeiten des Klebstoffes von der Taktung des übrigen Produktionsprozesses entkoppelt werden können.

Die Releaseschicht kann aus einer Releaselackierung, einer Silikonisierung oder Ähnlichem bestehen. Die flexible Folie des Verbundmaterials kann an ihrer Außenseite eine polyolefinische Schicht aufweisen, die mit der aufgesiegelten Deckelfolie eine peelfähige Verbindung bildet. Die Außenschicht der flexiblen Folie kann insbesondere als peelfähig modifizierte Polyethylenschicht ausgebildet sein. Im Rahmen der Erfindung liegt es auch, die Deckelfolie an ihrer der Schale zugewandten Kontaktfläche mit einer peelfähigen Schicht auszurüsten.

Im Folgenden wird die Erfindung anhand von Ausführungsbeispielen erläutert. Es zeigen schematisch:
- **Fig. 1**: einen Schnitt durch eine Trayverpackung für Lebensmittel,
- **Fig. 2a und 2b**: die in Fig. 1 dargestellte Trayverpackung während einer Hochdruckbehandlung zur Haltbarmachung des abgepackten Lebensmittels,
- **Fig. 3**: den Schichtenaufbau der die Trayverpackung bildenden Schale und einer die Schale verschließenden Deckelfolie,
- **Fig. 4**: einen alternativen Schichtenaufbau einer Barrierefolie zur Innenauskleidung der Schale,
- **Fig. 5**: ein Verfahren zur Herstellung einer tiefgezogenen Schale für die Trayverpackung und
- **Fig. 6**: den Schichtenaufbau eines Verbundmaterials in einer Explosionsdarstellung, aus dem eine tiefgezogene Schale für eine Trayverpackung hergestellt werden kann.

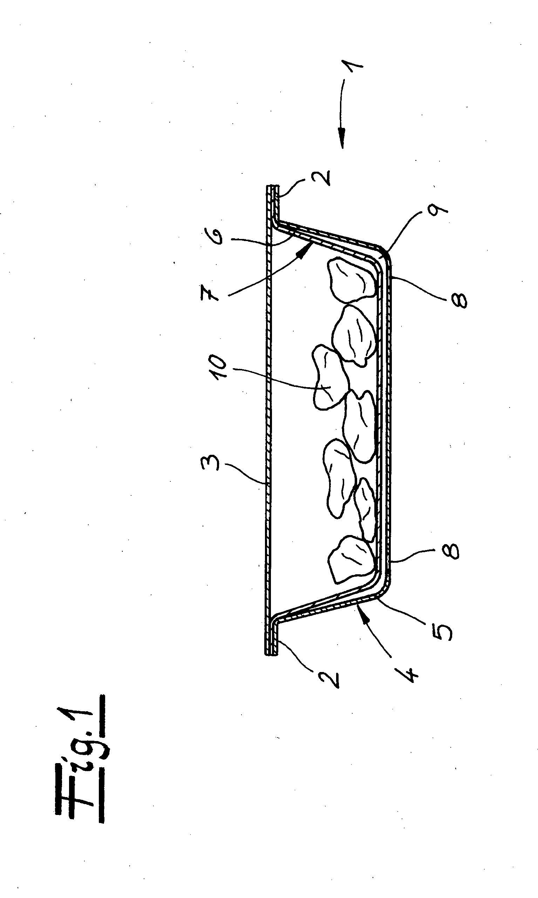

Die in Fig. 1 dargestellte Trayverpackung ist für Lebensmittel bestimmt und weist eine durch Tiefziehen gebildete Schale 1 sowie eine auf einem Rand 2 der Schale befestigte Deckelfolie 3 auf. Der von der Deckelfolie 3 und der Schale 1 eingeschlossene Verpackungsraum kann eine Schutzgasatmosphäre enthalten.

Die Schale 1 ist doppelwandig ausgebildet und weist eine Außenschale 4 aus einer durch Tiefziehen formbaren Trayfolie 5 und eine aus einer flexiblen Folie bestehende Innenauskleidung 7 auf. Die flexible Folie besteht im Ausführungsbeispiel aus einer mehrschichtigen Barrierefolie 6, die eine Barriereschicht für Sauerstoff bildet. Die Außenschale 4 und die Innenauskleidung 7 sind nur am Rand 2 der Schale fest verbunden, wobei diese Formulierung auch einen randnahen Flächenbereich einschließen soll. Ferner enthält die Außenschale 4 mindestens eine Öffnung 8 für einen Gas- und Flüssigkeitsaustausch, die in den unverbundenen Zwischenraum 9 zwischen der Außenschale 4 und der Innenauskleidung 7 mündet. Im Ausführungsbeispiel und gemäß einer bevorzugten Ausführung der Erfindung enthält die Außenschale 4 an ihrem Boden mehrere Öffnungen 8 in Form von Stanzlöchern.

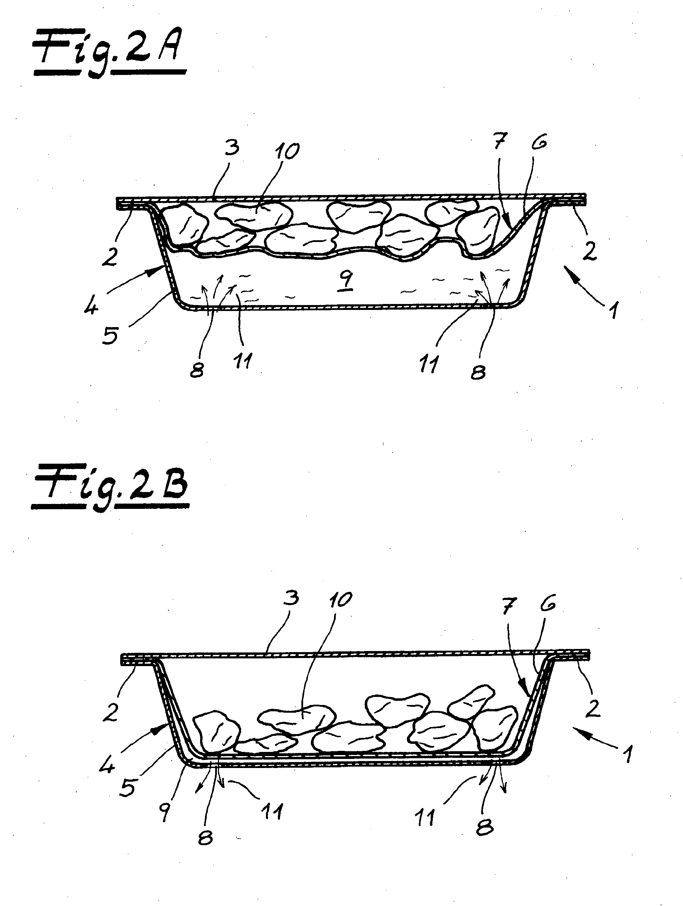

Das abgepackte Lebensmittel 10 kann durch ein Hochdruckverfahren haltbar gemacht werden. Dabei wird das bereits verpackte Lebensmittel 10 über einen Zeitraum von zumeist wenigen Minuten mit einem hohen Druck von bis zu 10000 bar beaufschlagt, um Keime zu vernichten. Die Fig. 2a und 2b zeigen das Verhalten der Trayverpackung während der Hochdruckbehandlung. Während der Hochdruckbehandlung strömt ein Druckübertragungsfluid 11, zumeist Wasser, durch die Öffnungen 8 im Boden der Außenschale 4 in den Zwischenraum 9 zwischen der Außenschale 4 und der Innenauskleidung 7 und komprimiert das von der Innenauskleidung 7 und der Deckelfolie 3 eingeschlossene Volumen, bis das Füllgut 10 vollständig an der Deckelfolie 3 und der die Innenauskleidung 7 bildenden Barrierefolie 6 anliegt (Fig. 2a). Die Außenschale 4 wird dabei in der Form nicht verändert, da außerhalb der Verpackung und im Zwischenraum 9 derselbe Druck herrscht. Nach der Hochdruckbehandlung und einer entsprechenden Druckentlastung wird die Barrierefolie 6 durch Gase, die im Füllgutraum zwischen der Innenauskleidung 7 und der Deckelfolie 3 eingeschlossen sind und wieder expandieren, in seine Ursprungsform zurückgedrückt und legt sich an die Innenfläche der Außenschale 4 an (Fig. 2b). Das Wasser, welches sich zwischen der Innenauskleidung 7 und der Außenschale 4 angesammelt hat, wird dabei aus dem Zwischenraum 9 nahezu vollständig wieder herausgedrückt. Gegebenenfalls kann die Verpackung im Anschluss an die Hochdruckbehandlung noch getrocknet werden.

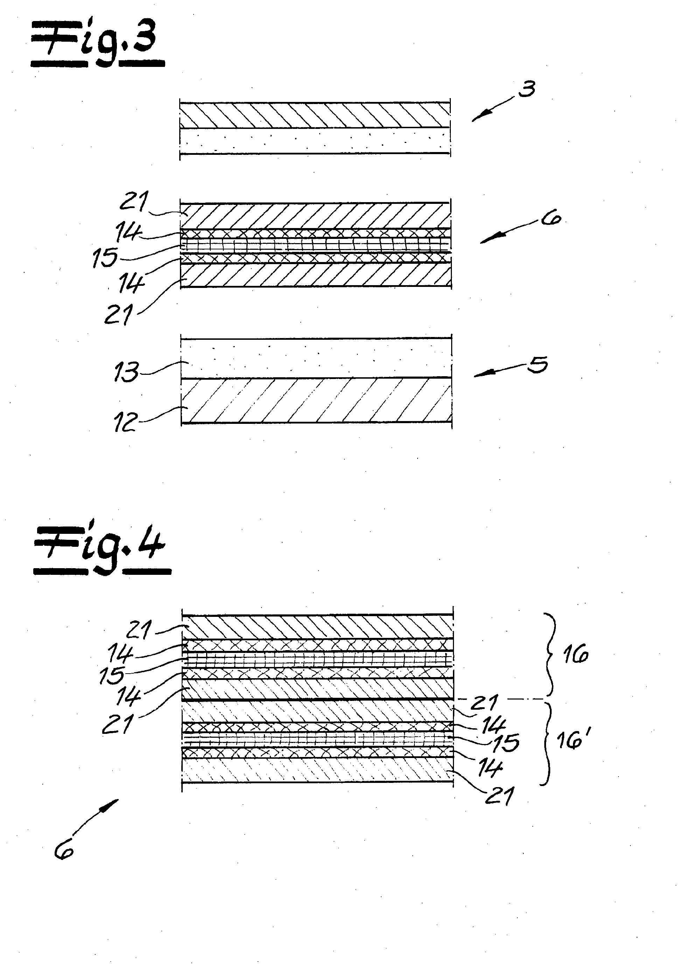

Die durch Tiefziehen der Trayfolie 5 gebildete Außenschale 4 weist eine für den Gebrauch der Trayverpackung ausreichende Formstabilität auf und stabilisiert die wesentlich flexiblere Barrierefolie 6, welche die Innenauskleidung 7 bildet. Die Trayfolie 5 für die Außenschale 4 kann aus nahezu beliebigen tiefziehfähigen Materialien gefertigt werden, die gegen die Innenauskleidung fest versiegelt werden können. Bevorzugt sind amorphe und zähe Verbundmaterialien, die eine Trägerschicht 12 aus Polyester, Polypropylen, Polystyrol oder Polycarbonat und an der Schaleninnenseite eine Deckschicht 13 aus einem siegelfähigen Polymer aufweisen (Fig. 3). Besonders geeignet ist ein Verbundmaterial aus APET/PE. Die Trayfolie weist zweckmäßig eine Dicke zwischen 150 µm und 2000 µm auf.

Die Barrierefolie 6, welche die Innenauskleidung 7 der Trayverpackung bildet, ist flexibel und legt sich während der Druckbehandlung des Lebensmittels unter Ausbildung von Falten an das Lebensmittel 10 an. Es sind Folien geeignet, die durch eine Faltenbildung nicht beschädigt werden und sich nach einer Druckentlastung im Wesentlichen wieder faltenfrei an die Innenfläche der Außenschale 4 anlegen. Die Barrierefolie 6 muss insbesondere eine wirksame Sauerstoffbarriere bilden, damit durch eine Hochdruckbehandlung eine deutliche Verlängerung der Haltbarkeit des Lebensmittels erreicht werden kann. Die Barrierefolie 6 weist zweckmäßig polyolefinische Außenschichten 21 und mindestens eine zwischen zwei Polyamidschichten 14 eingebettete Zwischenschicht 15 aus EVOH als Sauerstoffsperrschicht auf. Die Dicke der Barrierefolie 6 liegt im Bereich zwischen 50 µm und 350 µm (Fig. 3).

In dem in Fig. 4 dargestellten Ausführungsbeispiel ist die Barrierefolie 6 durch Verblockung von zwei mehrschichtigen Folien 16, 16' gebildet, wobei jede der beiden Folien 16, 16' den zuvor beschriebenen Schichtenaufbau aufweist und jede Folie 16, 16' eine Schichtdicke zwischen 25 und 175 µm aufweist. Durch Verblockung der beiden Folien 16, 16' steht ein vielschichtiger Aufbau. Die Barrierefolie 6 ist zäh und flexibel und zeichnet sich durch eine sehr hohe Sauerstoffsperrwirkung aus.

Die Deckelfolie 3 besteht im Ausführungsbeispiel aus einer nicht elastischen mehrschichtigen Folie, die mindestens eine Sauerstoffsperrschicht und an der Verpackungsinnenseite eine Siegelschicht aus einem siegelfähigen Polymer aufweist. Die Deckelfolie kann insbesondere aus einem PET/PE-Verbund bestehen. Elastische Deckelfolien können ebenfalls eingesetzt werden.

Die in Fig. 1 dargestellte Trayverpackung kann aus durch Tiefziehen vorgefertigten Formteilen hergestellt werden. Durch Tiefziehen der Barrierefolie 6 kann zunächst eine als Schale vorgeformte Innenauskleidung 7 gefertigt werden, die in eine durch Tiefziehen der Trayfolie 5 vorgeformte Außenschale 4 eingelegt wird. Die schalenförmige Innenauskleidung 7 kann dabei zum Portionieren der Lebensmittel benutzt werden. Die Deckelfolie 3, die Innenauskleidung 7 sowie die Außenschale 4 sind an Flächen, welche den Rand 2 der Schale 1 bilden, durch Siegelnähte thermisch verbunden.

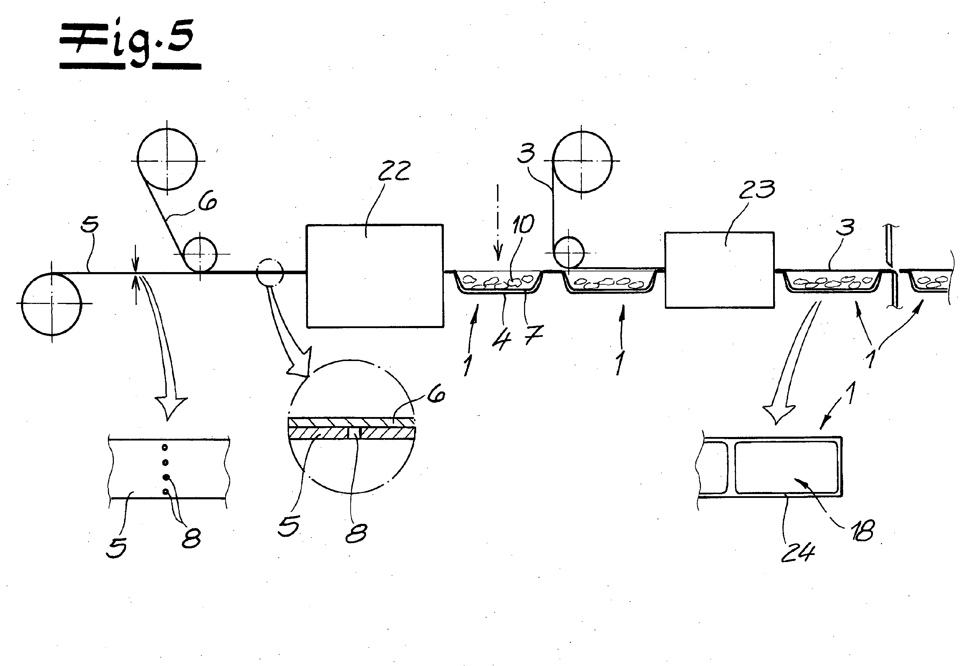

Fig. 5 zeigt ein bevorzugtes und besonders vorteilhaftes Verfahren zur Herstellung einer Schale. Dabei werden zunächst in eine durch Tiefziehen formbare Trayfolie 5 Öffnungen 8 eingebracht. Danach wird auf der gelochten Trayfolie 5 eine flexible Folie 6 angeordnet. In einem Tiefziehwerkzeug 22 werden die gelochte Trayfolie 5 und die flexible Folie 6 in Flächenbereichen, die einen durch Tiefziehen umzuformenden Umformbereich 18 umgeben, gasdicht in Kontakt gebracht. In dem Tiefziehwerkzeug 22 wird der Umformbereich 18 durch Anlegen eines auf die Folienanordnung wirkenden Unterdrucks zu einer zweilagigen Schale 1 umgeformt. Diese weist eine aus der Trayfolie 5 bestehende formstabile Außenschale 4 mit mindestens einer die Außenschale 4 durchsetzenden Öffnung 8 und eine aus der flexiblen Folie 6 bestehende Innenauskleidung 7 auf. In dem dargestellten Verfahren werden die Trayfolie 5 und die flexible Folie 6 während des Tiefziehens mittels eines Klemmwerkzeuges, welches den Umformbereich 18 umgibt, gasdicht in Kontakt gebracht. Nach dem Befüllen mit einem Lebensmittel 10 und dem Aufbringen einer Deckelfolie 3 werden die Trayfolie 5 und die flexible Folie 6 in einem Siegelwerkzeug 23 in einem randnahen Bereich der Schale 1 fest verbunden. Dies geschieht durch eine Siegelnaht 24, welche den Umformbereich 18 umgibt. Gleichzeitig wird auch die Deckelfolie 3 mit der Schale 1 durch die Siegelnaht 24 verbunden.

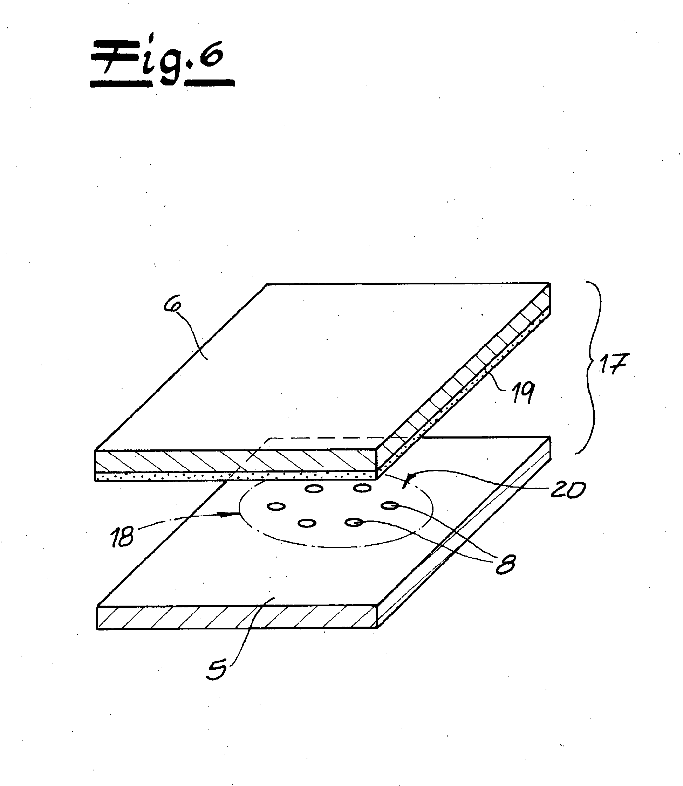

Die Schale 1 für die Trayverpackung kann auch durch Tiefziehen eines aus der Trayfolie 5 und der Barrierefolie 6 vorgefertigten zweilagigen Verbundmaterials 17 geformt werden. Das Verbundmaterial 17 ist in Fig. 6 in einer Explosionsdarstellung schematisch dargestellt. Die Trayfolie 5 bildet eine erste Lage des Verbundmaterials 17 und die Barrierefolie 6 die zweite Lage des Verbundmaterials 17. Die Lagen 5, 6 sind außerhalb eines durch Tiefziehen umzuformenden Umformbereiches 18 flächig verbunden, während innerhalb des Umformbereiches 18 keine Verbundhaftung zwischen der Trayfolie 5 und der Barrierefolie 6 vorhanden ist oder allenfalls eine schwache peelfähige Verbindung besteht, die sich während der Hochdruckbehandlung löst und das Einströmen des Druckübertragungsfluids zulässt. Die Trayfolie 5 enthält bereits im Umformbereich 18 des Verbundmaterials 17 die für einen Gas- und Flüssigkeitsaustausch notwendigen Öffnungen 8. Im Ausführungsbeispiel der Fig. 5 sind die Trayfolie 5 und die Barrierefolie 6 durch eine Klebstoffschicht 19 verbunden, wobei die Klebstoffschicht 19 im Umformbereich 18 des Verbundmaterials 17 entweder unterbrochen ist und/oder wobei in diesem Bereich auf einer zur Klebstoffschicht 19 benachbarten Folienfläche des Verbundmaterials eine Releaseschicht 20 aufgebracht ist, die an der Klebstoffschicht 19 nicht haftet. Das in Fig. 5 dargestellte Verbundmaterial kann als Rollenware verarbeitet und auf üblichen Tiefziehanlagen im Rapport umgeformt werden.

## Patentansprüche

1. Verfahren zur Herstellung einer Schale (1) für eine Trayverpackung für Lebensmittel, welche einen Rand (2) zur Befestigung einer Deckelfolie (3) aufweist
wobei in eine durch Tiefziehen formbare Trayfolie (5) Öffnungen (8) eingebracht werden,
wobei auf der gelochten Trayfolie (5) eine flexible Folie (6) angeordnet wird,
wobei die gelochte Trayfolie (5) und die flexible Folie (6) in Flächenbereichen, die einen durch Tiefziehen umzuformenden Umformbereich umgeben, gasdicht in Kontakt gebracht werden, und
wobei der Umformbereich in einem Tiefziehwerkzeug (17) durch Anlegen eines auf die Folienanordnung wirkenden Unterdrucks zu einer zweilagigen Schale (1) umgeformt wird, die eine aus der Trayfolie (5) bestehende formstabile Außenschale (4) mit mindestens einer die Außenschale (4) durchsetzenden Öffnung (8) und eine aus der flexiblen Folie (6) bestehende Innenauskleidung (7) aufweist, **dadurch gekennzeichnet, dass** die Trayfolie und die flexible Folie (6) mittels eines Klemmwerkzeuges, welches den Umformbereich (18) umgibt, während des Tiefziehens gasdicht in Kontakt gebracht und nach dem Tiefziehen im Randbereich der Schale (1) oder in einem randnahen Bereich der Schale (1) fest verbunden werden.

2. Verfahren nach Anspruch 1, **dadurch gekennzeichnet, dass** die Außenschale (4) und die Innenauskleidung (7) durch mindestens eine Siegelnaht (24), welche den Umformbereich (18) umgibt, verbunden werden.

3. Verfahren zur Herstellung einer Schale (1) für eine Trayverpackung für Lebensmittel, welche einen Rand (2) zur Befestigung einer Deckelfolie (3) aufweist
wobei in eine durch Tiefziehen formbare Trayfolie (5) Öffnungen (8) eingebracht werden,
wobei auf der gelochten Trayfolie (5) eine flexible Folie (6) angeordnet wird,
wobei die gelochte Trayfolie (5) und die flexible Folie (6) in Flächenbereichen, die einen durch Tiefziehen umzuformenden Umformbereich umgeben, gasdicht in Kontakt gebracht werden, und
wobei der Umformbereich in einem Tiefziehwerkzeug (17) durch Anlegen eines auf die Folienanordnung wirkenden Unterdrucks zu einer zweilagigen Schale (1) umgeformt wird, die eine aus der Trayfolie (5) bestehende formstabile Außenschale (4) mit mindestens einer die Außenschale (4) durchsetzenden Öffnung (8) und eine aus der flexiblen Folie (6) bestehende Innenauskleidung (7) aufweist, **dadurch gekennzeichnet, dass** die Schale (1) durch Tiefziehen eines aus der Trayfolie (5) und der flexiblen Folie (6) vorgefertigten zweilagigen Verbundmaterials (17) geformt wird, wobei die Trayfolie (5) eine erste Lage des Verbundmaterials (17) bildet, wobei die flexible Folie (6) die zweite Lage des Verbundmaterials (17) bildet, wobei die Lagen außerhalb des durch Tiefziehen umzuformenden Umformbereiches (18) flächig verbunden sind, wobei innerhalb des Umformbereiches (18) keine feste Verbundhaftung zwischen der Trayfolie (5) und der flexiblen Folie (6) vorhanden ist und wobei die Trayfolie (5) im Umformbereich (18) des Verbundmaterials (17) mindestens eine Öffnung (8) enthält.

4. Verfahren nach Anspruch 3, **dadurch gekennzeichnet, dass** die Trayfolie (5) und die flexible Folie (6) des Verbundmaterials (17) durch eine Klebstoffschicht (19) verbunden sind, wobei die Klebstoffschicht (19) im Umformbereich (18) des Verbundmaterials (17) unterbrochen ist und/oder wobei in diesem Bereich auf einer zur Klebstoffschicht (19) benachbarten Folienfläche des Verbundmaterials (17) eine Releaseschicht (20) aufgebracht ist, die an der Klebstoffschicht (19) nicht haftet.

## Claims

1. A method for producing a bowl (1) for tray packaging for food, which has an edge (2) for fastening a covering foil (3),
openings (8) being introduced into a tray foil (5) that can be moulded by deep drawing,
a flexible tray foil (6) being arranged on the perforated tray foil (5),
the perforated tray foil (5) and the flexible foil (6) being brought into contact in a gas-tight manner in areas that surround a reshaping region to be reshaped by deep drawing, and
the reshaping region being reshaped in a deep-drawing die (17) by applying a vacuum that acts on the foil arrangement to form a two-layered bowl (1), which has a dimensionally stable outer bowl (4), which consists of the tray foil (5) and has at least one opening (8) that passes through the outer bowl (4), and an inner lining (7), which consists of the flexible foil (6), **characterised in that** the tray foil and the flexible foil (6) are brought into contact in a gas-tight manner during the deep-drawing process by means of a clamping tool that surrounds the reshaping region (18) and are fixedly connected after the deep-drawing process in the edge region of the bowl (1) or in a region of the bowl (1) close to the edge.

2. The method according to Claim 1, **characterised in that** the outer bowl (4) and the inner lining (7) are connected by at least one seal seam (24), which surrounds the reshaping region (18).

3. A method for producing a bowl (1) for tray packaging for food, which has an edge (2) for fastening a covering foil (3),
openings (8) being introduced into a tray foil (5) that can be moulded by deep drawing,
a flexible tray foil (6) being arranged on the perforated tray foil (5),
the perforated tray foil (5) and the flexible foil (6) being brought into contact in a gas-tight manner in areas that surround a reshaping region to be reshaped by deep drawing, and
the reshaping region being reshaped in a deep-drawing die (17) by applying a vacuum that acts on the foil arrangement to form a two-layered bowl (1), which has a dimensionally stable outer bowl (4), which consists of the tray foil (5) and has at least one opening (8) that passes through the outer bowl (4), and an inner lining (7), which consists of the flexible foil (6),
**characterised in that**
the bowl (1) is moulded by deep-drawing a two-layered composite material (17) prefabricated from the tray foil (5) and the flexible foil (6), wherein the tray foil (5) forms a first layer of the composite material (17), wherein the flexible foil (6) forms the second layer of the composite material (17), wherein the layers are areally connected outside the reshaping region (18) to be reshaped by deep drawing, wherein there is no permanent adhesion between the tray foil (5) and the flexible foil (6) within the reshaping region (18), and wherein the tray foil (5) contains at least one opening (8) in the reshaping region (18) of the composite material (17).

4. The method according to Claim 3, **characterised in that** the tray foil (5) and the flexible foil (6) of the composite material (17) are connected by an adhesive layer (19), wherein the adhesive layer (19) is interrupted in the reshaping region (18) of the composite material (17) and/or wherein in said region a release layer (20) is applied to a foil face of the composite material (17) that is adjacent to the adhesive layer (19), which release layer does not adhere to the adhesive layer (19).

## Revendications

1. Procédé de fabrication d'une coque (1) pour une barquette d'emballage pour produits alimentaires, laquelle présente un bord (2) destiné à la fixation d'un film de couverture (3),
sachant que des ouvertures (8) sont pratiquées dans un film de barquette (5) pouvant être formé par emboutissage,
sachant qu'un film flexible (6) est disposé sur le film de barquette perforé (5),
sachant que le film de barquette perforé (5) et le film flexible (6) sont mis en contact en étanchéité gazeuse dans des zones de surface qui entourent une zone de déformation à former par emboutissage, et
sachant que la zone de déformation est formée en une coque (1) bi-couches dans un outil d'emboutissage (17) par l'application d'un vide agissant sur l'agencement de films, laquelle présente une coque extérieure (4) à forme stable se composant du film de barquette (5) comprenant au moins une ouverture (8) traversant la coque extérieure (4), et un habillage intérieur (7) se composant du film flexible (6), **caractérisé en ce que** le film de barquette et le film flexible (6) sont, par un outil de serrage qui entoure la zone de déformation (18), amenés en contact étanche aux gaz pendant l'emboutissage et reliés fixement dans la bordure de la coque (1) ou dans une zone proche du bord de la coque (1) après l'emboutissage.

2. Procédé selon la revendication 1, **caractérisé en ce que** la coque extérieure (4) et l'habillage intérieur (7) sont reliés par au moins un joint thermosoudé (24) qui entoure la zone de déformation (18).

3. Procédé de fabrication d'une coque (1) pour un emballage de barquette pour produits alimentaires, laquelle présente un bord (2) destiné à la fixation d'un film de couverture (3),
sachant que des ouvertures (8) sont pratiquées dans un film de barquette (5) pouvant être formé par emboutissage,
sachant qu'un film flexible (6) est disposé sur le film de barquette perforé (5),
sachant que le film de barquette perforé (5) et le film flexible (6) sont mis en contact en étanchéité gazeuse dans des zones de surface qui entourent une zone de déformation à former par emboutissage, et
sachant que la zone de déformation est formée en une coque (1) bi-couches dans un outil d'emboutissage (17) par l'application d'un vide agissant sur l'agencement de films, laquelle présente une coque extérieure (4) à forme stable se composant du film de barquette (5) comprenant au moins une ouverture (8) traversant la coque extérieure (4) et un habillage intérieur (7) se composant du film flexible (6), **caractérisé en ce que** la coque (1) est formée par emboutissage d'un matériau composite (17) bi-couches préfabriqué par le film de barquette (5) et le film flexible (6), sachant que le film de barquette (5) forme une première couche du matériau composite (17), sachant que le film flexible (6) forme la seconde couche du matériau composite (17), sachant que les couches sont reliées entre elles sur toute l'étendue hors de la zone de déformation (18) à former par emboutissage, sachant qu'à l'intérieur de la zone de déformation (18), aucune résistance solide de contre-collage entre le film de barquette (5) et le film flexible (6) n'est présente, et sachant que le film de barquette (5) contient au moins une ouverture (8) dans la zone de déformation (18) du matériau composite (17).

4. Procédé selon la revendication 3, **caractérisé en ce que** le film de barquette (5) et le film flexible (6) du matériau composite (17) sont reliés par une couche d'adhésif (19), sachant que la couche d'adhésif (19) est interrompue dans la zone de déformation (18) du matériau composite (17) et/ou sachant que dans cette zone, une couche de libération (20) qui n'adhère pas à la couche d'adhésif (19) est appliquée sur une surface de film du matériau composite (17) voisine de la couche d'adhésif (19).
